# EUROPÄISCHE PATENTSCHRIFT

(11) **EP 2 159 122 B1**
(45) Veröffentlichungstag und Bekanntmachung des Hinweises auf die Patenterteilung: **19.10.2011**
(21) Anmeldenummer: 09450112.9
(22) Anmeldetag: 05.06.2009
(51) Int. Cl.: B60W 50/08, B60C 23/04, G01C 21/26, G07C 5/00, G08G 1/127, G01C 21/34, G08G 1/09

(54) **Verfahren und System zur simultanen Fahrzeug- und Fahrprofilüberwachung**
Method and system for simultaneous vehicle and driving profile monitoring
Procédé et système de surveillance de profil de conduite et de véhicule simultanée

(30) Priorität: 05.06.2008 AT 9082008
(43) Veröffentlichungstag der Anmeldung: 03.03.2010
(73) Patentinhaber: Efkon AG, 8074 Raaba (AT)
(72) Erfinder: Lydike, Matthias, 12526 Berlin (DE)
(74) Vertreter: Sonn & Partner Patentanwälte

(56) Entgegenhaltungen:
- WO-A2-99/09374
- GB-A- 2 429 100
- JP-A- 2004 295 360
- US-A1- 2002 193 926
- US-A1- 2005 256 635
- US-A1- 2006 071 766

## Beschreibung

Die Erfindung betrifft ein Verfahren sowie ein System zur simultanen Fahrzeug- und Fahrprofilüberwachung gemäß dem Oberbegriff der unabhängigen Ansprüche.

Aus der GB 2 429 100 A, die als nächstkommender Stand der Technik anzusehen ist, ist ein Fahrzeug-Überwachungssystem bekannt, das ein Fahrzeuggerät aufweist, welches zumindest Geschwindigkeit und Position des Fahrzeugs erfasst. Das Fahrzeuggerät kommuniziert mit einem entfernten Server, wobei das Fahrzeuggerät in periodischen Abständen ein Signal an den Server übermittelt, das mittels GPS erfasste Positionsdaten enthält. Die übermittelten Daten erlauben es dem Server, Position und Geschwindigkeit des Fahrzeugs laufend zu überwachen. Der Server weist ein Speichermodul auf, in dem Straßenkarten mit zugehörigen Geschwindigkeitsbegrenzungen abgelegt sind. Bei Überschreiten einer Geschwindigkeitsbegrenzung kann automatisch eine Strafverfügung veranlasst werden. Zudem kann das System dazu eingerichtet sein, die Geschwindigkeit des Fahrzeugs zu kontrollieren. Zu diesem Zweck ist das Fahrzeuggerät mit einem Antriebs-Kontrollsystem, einer Getriebesteuerung und einer Bremssteuerung des Fahrzeugs verbunden. Wenn das Fahrzeuggerät oder der Remote-Server eine Geschwindigkeitsübertretung erfassen, setzt das Fahrzeuggerät die manuelle Steuerung des Fahrzeugs außer Kraft und sendet einen Steuerbefehl an die Getriebesteuerung, die Bremssteuerung oder das Antriebs-Kontrollsystem, um eine Reduktion der Geschwindigkeit des Fahrzeugs zu bewirken.

Aus der WO 2005/109273 A1 ist ein System zur Verbesserung der Verkehrssicherheit durch Fern-Überwachung des Fahrverhaltens von Fahrzeug-Lenkern bekannt, wobei jeder Teilnehmer (KFZ-Fahrzeuge, Boote etc.) über einen Fahrtenschreiber verfügt, welcher mit verschiedenen Sensoren, wie GPS-Sensor, Tachometer, Beschleunigungssensor etc., in Verbindung steht. Die Daten von den Sensoren werden über ein Kommunikationsmodul laufend zu einem Server übertragen, welcher wiederum mit mehreren Service-Anbietern (Versicherungsgesellschaften, Notruf-Zentralen, Fahrschulen und dgl.) verbunden ist. Mit der entsprechenden Authorisierung durch den jeweiligen Benutzer leitet der Server relevante Teile des Datenstroms zwischen den Teilnehmern und dem zentralen Server an einen oder mehrere Service-Anbieter weiter, wo die Daten mit jenen von anderen Teilnehmern bzw. mit abgespeicherten Modell-Daten vergleichen werden. Auf Grundlage der analysierten Daten wird dem jeweiligen Teilnehmer ein Feedback mit Informationen bezüglich seines Fahrverhaltens übermittelt.

In der EP 1 081 670 A2 ist eine Vorrichtung beschrieben, bei welcher sowohl Fahrzeug- als auch Fahrer-bezogene Informationen zu einem zentralen Informationsdienst übertragen werden. Dabei erfolgt die Übertragung der Position des Fahrzeugs über einen Satelliten; Fahrer-bezogene Informationen (Bremskraft, Lenkwinkel, gewählter Gang, etc.) sowie mit Hilfe von Sensoren gesammelte Daten zum Zustand des Fahrzeugs bzw. von einzelnen Fahrzeug-Komponenten (Batterie-Spannung, verbleibende Treibstoff-Füllung) werden via DSRC bzw. ein Mobilfunknetz an den Informationdienst übermittelt. Die Übertragung der Daten zum Informationsdienst erfolgt verschlüsselt. Die gesammelten Daten werden im Informationsdienst statistisch analysiert, in einer Datenbank gespeichert und Dienstleistern, wie Leihwagen-Unternehmen, KFZ-Herstellern, Versicherungsgesellschaften etc., zur Verfügung gestellt, welche die Daten mit jenen von anderen Teilnehmern vergleichen.

In der US 2002/0111725 A1 ist ein Computer-System geoffenbart, bei welchem von Fahrzeug-Sensoren aufgenommene Daten über ein Fahrzeug-Kommunikations-Modul an ein Netzwerk, welches beispielsweise mit Versicherungsgesellschaften verbunden ist, übertragen werden können. Aus der WO 2001/055690 A1 ist ein System zur Bewertung von Fahrprofilen bzw. von Fahrzeug-Lenkern bekannt. Die WO 01/55690 A1 betrifft allgemein ein System zur Übertragung von Fahrzeug-Diagnosedaten an einen zentralen Server.

In der EP 1 705 085 B1 ist eine Vorrichtung beschrieben, die eine Authentifizierung von Personen auf dem Fahrersitz von Kraftfahrzeugen unter Zuhilfenahme biometrischer Daten erlaubt. Dabei werden bildgebende Verfahren eingesetzt. Ziel dieser Vorrichtung ist das Verhindern einer unautorisierten Nutzung des entsprechend ausgestatteten Fahrzeugs.

In der US 2002/0193926 A1 ist ein andersartiges System zum automatischen Versenden von Reparaturanfragen bei Auftreten eines Fahrzeugschadens gezeigt. Ein Fahrzeug ist mit einer Überwachungs-Einrichtung ausgestattet, welche den Motor sowie vorhandene elektronische Geräte überwacht. Zudem ist ein Navigationssystem vorgesehen, welches über ein drahtloses Interface mit einem Mobiltelefon verbunden ist. Positionsdaten werden über GPS erhalten. Wenn mittels eines Schaden-Detektors der Überwachungs-Einrichtung ein Schadensfall erkannt wird, kann eine Schadensmeldung über ein Kommunikationsnetzwerk an ein zentrales System (Antwort-Zentrale, Reparaturwerkstätte, etc.) abgegeben werden. Als Benutzer-ID kann das Mobiltelefon verwendet werden, wodurch eine einfache Abrechnung der von der Reparaturwerkstätte vorgenommenen Leistungen ermöglicht wird.

Die Verwendung kryptographisch geschützter Verbindungen ist an sich seit langem Stand der Technik. Insbesondere durch die Verwendung in der drahtlosen Kommunikation im Bereich lokaler Netze haben Krypto-Verfahren einen sowohl hardware- als auch softwaretechnisch hohen Reife- und Standardisierungsgrad erlangt, z.B. DES, 3DES, AES, RSA.

Die Erfassung von Bewegungsdaten in Kraftfahrzeugen hat ebenfalls bereits Tradition, jedenfalls seit den 1980er Jahren. In der Folge angemeldete Patente haben hier im Wesentlichen dem technologischen Fortschritt Rechnung getragen. Als Beispiele seien genannt: DE 3 405 757 A1, DE 3 520 383 A1, DE 19 509 711 A1, EP 621564 A und JP 8 235 484 A.

Stochastische Verfahren zur Erkennung bestimmter Muster in komplexen Datenmengen sind aus der Bild- und Sprachverarbeitung bekannt. Insbesondere in Zusammenhang mit dem gezielten Anlernen von Systemen, die solche Verfahren nutzen, werden respektable Ergebnisse erzielt. Ein solches Verfahren ist z.B. in EP 0 847 354 B1 beschrieben.

Aufzeichnungsgeräte für Ereignisse während einer Fahrt (oder eines Flugs - s. sog. Black Box) gibt es seit Jahren in großer Vielfalt. Allen gemeinsam ist eine in der Regel Schwellwert-getriggerte Erfassung von Ereignissen, die, wenn sie einmal eingetreten sind, anhand der aufgezeichneten Daten nachvollzogen und analysiert, und deren Ursachen erkennbar gemacht werden sollen. Das bedeutet, dass die bisher eingesetzten Hilfsmittel am Ende einer Ereigniskette ansetzen, um mit deren bei der Auswertung erzielten Ergebnissen zu späteren Zeitpunkten, analog entstehenden Ereignisketten ihre Zwangsläufigkeit zu nehmen.

Die hier beschriebene Erfindung soll innerhalb einer Ereigniskette deutlich früher ansetzen, um so eine Rückwirkung noch innerhalb derselben Ereigniskette erzielen zu können und damit bereits in einer frühen Stufe Zwangsläufigkeiten im Ablauf zu unterbrechen. Hierfür nützbare Systeme sind an verschiedenen Stellen bereits in Fahrzeugen integriert. Dazu zählen beispielsweise ABS, ESP, Bremsassistent, Einparkhilfen etc. Diesen Systemen gemeinsam ist der Umstand, dass alle Daten zur Erzeugung eines Feedback im jeweiligen Fahrzeug vorhanden sind, so dass eine Rückwirkung auf die aktuelle Ereigniskette unmittelbar möglich ist. Bei allen Situationen hingegen, bei denen Bedingungen und Umwelteinflüsse eine Rolle spielen, die aus dem Fahrzeug heraus nicht erfassbar bzw. messbar sind, sind solche unmittelbaren Feedback-Systeme bisher nicht verfügbar. Genau dies zu ermöglichen, ist eine der Aufgaben der Erfindung.

Demgemäß sieht die Erfindung ein Verfahren und ein System wie in den unabhängigen Ansprüchen definiert vor. Vorteilhafte Ausführungsformen und Weiterbildungen sind in den abhängigen Ansprüchen angegeben.

Mit der vorliegenden Technik ist nicht nur die Aufzeichnung von Unfällen, sondern auch die Erkennung des Beherrschungsgrades des Fahrzeugs und die Erkennung von Gefahrensituationen sowie deren Prävention möglich. Hierzu weist das System eine Fahrzeugeinrichtung und ein zentrales System auf; die Fahrzeugeinrichtung weist bevorzugt außer einem Fahrtenschreiber auch ein MMI (Maschine-Mensch-Interface) sowie diverse Sensoren und eine Kommunikationseinrichtung auf; das zentrale System ist insbesondere mit einem Computersystem, einer zentralen Datenbasis, mindestens einer Kommunikationseinrichtung sowie einer Einrichtung zur Authentifizierung ausgestattet, wobei zwischen dem zentralen System und der Fahrzeugeinrichtung eine gesicherte Verbindung aufgebaut werden kann. Um zumindest den Lenker eines betroffenen Fahrzeugs informieren zu können, werden abhängig vom Auswertungsergebnis Signale vom zentralen System zum Fahrzeug über die gesicherte Verbindung zurück übertragen. Dabei werden im gegebenen Fall die Signale in einer Fahrzeugeinrichtung zu direkten Steuer- bzw. Regelsignalen für Fahrzeug-Komponenten, z.B. die Bremsanlage, umgesetzt. Zumindest werden bei der Auswertung der Daten Gefahrensituationen bzw. -potentiale erkannt und durch Rücksenden von Signalen über die gesicherte Verbindung im Fahrzeug angezeigt.

Die vom Fahrzeug übertragenen Daten werden im zentralen System in zwei parallel verlaufenden Prozessketten verwertet, wobei in der einen Prozesskette die Daten im Hinblick auf ein Lernen und Trainieren des Systems, z.B. zur Ergänzung und/oder Optimierung von Grenzwert-Daten, verwertet werden, wogegen sie in der anderen Prozesskette analysiert und ausgewertet werden. Auch hat es sich als günstig erwiesen, wenn bei der Auswertung der Daten Verhaltens-Profile vom Fahrzeug und/oder Fahrer erstellt werden.

Von Vorteil ist es, wenn die Verbindung unter Feststellung der Identität von Fahrzeug und Fahrer einerseits und des zentralen Systems andererseits authentifiziert wird, und/oder wenn die Verbindung kryptographisch gesichert wird.

Günstig ist es auch, wenn Auswertungsergebnisse mit geographischen Positionen, Straßendaten und/oder Verkehrszuständen korreliert werden; wenn die Bewegungs- bzw. Zustandsdaten statistisch ausgewertet werden; und/oder wenn die Bewegungs- bzw. Zustandsdaten stochastischen Vergleichen unterzogen werden.

Weiters ist es zweckmäßig, wenn bei der Auswertung eine Ereignis-, Gefahren- und/oder Verlaufskarte angelegt wird. Insbesondere ist es günstig, wenn auf Basis der Auswertung ein Fahrerprofil bzw. eine Bewertung der Fahrereigenschaften ermittelt wird.

Von Vorteil ist es beim vorliegenden System weiters, wenn das zentrale System eine Einheit zur Verwaltung von Unternehmenskarten in Zuordnung zur Kommunikationseinrichtung aufweist; und/oder wenn das zentrale System eine Schnittstelle und Zugänge (Portale) zu externen Stellen, wie Kunden etc., aufweist.

Vorzugsweise weist das zentrale System einen Notfall-Router auf, der direkt mit der Datenverarbeitungseinheit verbunden ist. Dieser Notfall-Router ist insbesondere auch eingerichtet, drahtlos übertragene Notruf-Signale direkt zu empfangen.

Zur Umsetzung der Erfindung sind somit insbesondere nachfolgend kurz beschriebene Technologiebestandteile zweckmäßig:
- eine Authentifizierung der miteinander kommunizierenden und wechselwirkenden Systemteile zur Feststellung der Identität von Fahrzeug und Fahrer auf der einen und zentralem System auf der anderen Seite
- eine manipulationssichere, kryptographisch geschützte Kommunikationsverbindung
- eine Erfassung von Bewegungs- und Zustandsdaten durch Sensoren
- eine statistische Auswertung und stochastische Vergleiche von Bewegungs- und Zustandsdaten
- eine Korrelation von Ergebnissen der statistischen Auswertung mit geographischen Positionen, Straßendaten und Verkehrszuständen
- eine permanente Grenzwertermittlung für alle im Fahrzeug messbaren und beeinflussbaren Größen und deren (permanente) Plausibilitätsprüfung anhand statistischer und stochastischer Prozesse im vorliegenden Datenbestand
- ein Feedback-System vom zentralen System zum Fahrzeug
- Remote-Eingriffe in die Fahrzeugsteuerung, z.B. Zwangsbremsung

An dieser Stelle ist es zweckmäßig, auch einige beispielhafte Begriffsbestimmungen anzuführen:
**ABS:** Anti-Blockier-System, ein System, das anspricht, wenn durch die Bremswirkung Räder eines Fahrzeugs blockieren und damit die vom Betrag her höhere Haftreibung durch die niedrigere Gleitreibung den Kontakt zur Straße realisiert. In solchen Fällen unterbricht das ABS die Bremswirkung kurzzeitig, bis wieder eine Drehbewegung des Rades festgestellt wird usw., bis zum Stillstand des Fahrzeugs.
**BOS-Net:** Digitales Funknetz für Behörden und Organisationen mit Sicherheitsaufgaben, damit sind i.d.R. Feuerwehren, Polizei, Hilfsdienste und Geheimdienste, jedoch nicht das Militär, miteinander verbunden. Das BOS-Net ist vom öffentlichen Netz vollständig separiert.
**ESP:** Das Electronic Stability Program (auch ESC -electronic stability control) stellt Unregelmäßigkeiten im Gleichlauf der vier Räder und/oder eine Divergenz zwischen Lenkbewegung des Fahrers und der Reaktion des Fahrzeugs fest und korrigiert diese.
**Gyro**: Sensor zur Messung des Drehwinkels, auch Drehwinkelgeber genannt. Die Messung eines Sensors bezieht sich immer auf eine Ebene.
**Off-Board Navigation:** Navigationsgerät ohne Speicher für Kartendaten. Nach Zieleingabe und festgestellter Ausgangsposition wird die Route von einem Server gerechnet und zusammen mit dem relevanten Kartenausschnitt über ein Kommunikationsnetz ins Fahrzeug übertragen und danach zum Navigieren benutzt.
**Retarder:** Üblicherweise in schweren Nutzfahrzeugen genutzter Verstärker der Motorbremse, der durch Komprimierung der Auspuffgase den Motor quasi als Kompressor laufen lässt. Retarder werden beispielsweise bei langen Abfahrten als wirkungsvolle, vor allem aber nicht heiß laufende Bremse eingesetzt. Gelegentlich werden sie zusätzlich noch durch hydraulische Systeme unterstützt.
**RMR-System:** Remote Motion Recording and Analysis System - System zur fernen Aufzeichnung und Analyse von Bewegungen.

Das erfindungsgemäße System arbeitet insbesondere auf der Grundlage von topographischen Straßenkarten wie ein Off-Board Navigationssystem. Die in ihm erfassten Gebiete werden dabei z.B. in Planquadrate unterteilt, um sie bis zur Fahrzeugeinrichtung hin handhabbar zu strukturieren. Die am zentralen System angebundenen Fahrzeuge liefern zum einen eine Reihe statistischer Daten, die im zentralen System positionsbezogen verarbeitet, ausgewertet und gespeichert werden, zum anderen liefert das zentrale System den angebundenen Fahrzeugen Informationen und Hilfestellungen zur Erhöhung der Verkehrssicherheit und Minimierung von Unfall- und sonstigen Risiken. Darüber hinaus können Fuhrunternehmer, Halter und Fahrer weitere Informationen über Fahrverhalten und Fahrzeugbeanspruchung erhalten, die zum Optimieren der Fahrweise und damit zur Reduktion von Betriebskosten und Verschleiß verwendet werden können. Durch die Fülle der Daten ist ein Rating (eine Bewertung) für Fahrer und Fahrzeug möglich.
Für den Transport von Gefahrgütern sind besondere Maßnahmen vorgesehen.

Das hier vorgeschlagene System arbeitet, wie erwähnt, in zwei parallel laufenden Prozessketten, die sich beide aus den aus den Fahrzeugen erhobenen Daten speisen. Die eine Prozesskette beschäftigt sich mit der Analyse der Daten, abgestimmt auf das Lernen und Trainieren des Systems, insbesondere mit der permanenten Ergänzung/Optimierung der Entscheidungsdaten, die für die zweite Prozesskette von entscheidender Bedeutung sind.

Die zweite Prozesskette analysiert die einlaufenden Daten, um Profile von Fahrzeug und Fahrern zu erstellen und um ggfs. Gefahrensituationen oder -potentiale zu erkennen und entsprechend Hinweise auszugeben oder selbst aktiv einzugreifen, wobei die Notwendigkeit von Hinweisen oder aktivem Eingreifen aus dem akkumulierten Erfahrungsschatz der Entscheidungsdaten herrührt.

Für die Datenaufnahme im Fahrzeug steht eine Fahrzeugeinrichtung zur Verfügung, deren Ausstattung variabel gestaltet werden kann, die im Maximalausbau aber z.B. folgende Komponenten beinhaltet:
- 3D Gyro
- 3D Beschleunigungs-Sensor
- GPS, GSM Ortung
- Feuchtigkeitssensoren, ggfs. gespeist aus den Informationen des Regensensors, übertragen z.B. via CAN-Bus (oder LIN-Bus)
- Geschwindigkeitsmessung via GPS, via Bussystem (z.B. CAN), via Impulseingang
- Drehzahlmessung via Bussystem (z.B. CAN), via Impulseingang
- Messmikrofon zur Aufnahme von Umgebungsgeräuschen
- IR-, Rauchgas- und Temperatursensoren
- ggfs Drucksensoren in der Luftfederung zur ungefähren Bestimmung der Gesamtmasse
- Bremssignal, ggfs. Informationen über Ansprechen von ABS und/oder ESP via Bussystem (z. B. CAN)
- exakte Zeitmessung
- zusätzliches Interface für den Anschluss von Sensoren für spezielle Gefahrgut-Transporter
- Direktverbindung zur Kommunikationseinrichtung mit Notspeisung
- Kartenleser zur Feststellung der Fahrer-Identität
- ggfs. weitere, über das Bussystem verfügbare Daten

Ist ein Fahrzeug derart ausgestattet und mit dem zentralen System verbunden, lassen sich anhand der lieferbaren Daten fortlaufend eine ganze Reihe von Profilen erstellen:
- Fahrerprofile betreffend Fahrweise, Fahrzeugverschleiß und Gefahrenpotential unter Ausnutzung von Daten, wie Drehzahl, Ausfahren von Gängen, Schalthäufigkeit, Kurvengeschwindigkeit, Seitenführungskräften, Bremsaktivitäten, Spitzen- und Durchschnittsgeschwindigkeiten etc.
- Fahrzeugprofile für die Ermittlung fahrzeugspezifischer, typischer Fahrweisen, wie Drehzahlverläufe, Schaltverläufe, Drehzahlanteile im optimalen Bereich etc., z.B. für Steigungen, Gefälle, Normalstrecken etc., sowie die Ladungsverteilung
- Bewertungsprofile für das Rating von Fahrern und Fahrzeugen
- Gefahrenkarten für Orte/Bereiche/Straßenabschnitte mit allgemein erhöhtem bzw. Witterungs- oder Verkehrsdichte-bedingt erhöhtem Gefahrenpotential

Zur Sicherstellung zum einen der Authentizität der Daten und zum anderen aus Gründen des Datenschutzes wird die Anbindung der Fahrzeuge genauso wie die Übertragung der Daten durch Authentifizierung und Verschlüsselung geschützt. Die Authentifizierung wird auch für die Abrechnung ggfs. erbrachter Dienstleistungen des RMR-System verwendet.

Zur Vervollständigung bzw. Ergänzung der verfügbaren Daten können dem System noch Verbindungen zu Verkehrsmanagement- und Informationssystemen wie auch zu Unfalldatenbanken der jeweils zuständigen Behörden zugänglich gemacht werden.

Für Notsituationen schließlich kann das System auf Notruffunktionen zurückgreifen, die über das zentrale System steuerbar sind, insbesondere dann, wenn neben Polizei und Feuerwehr noch andere Institutionen informiert werden müssen, dem Fahrzeug selbst aber keine Möglichkeit bleibt, neben einem elementaren, automatischen Notruf noch weitere Informationen abzusetzen.

Die Erfindung wird nachfolgend anhand von bevorzugten Ausführungsbeispielen, auf die sie jedoch nicht beschränkt sein soll, und unter Bezugnahme auf die Zeichnung noch weiter erläutert. In dieser zeigen:
Fig. 1 schematisch das erfindungsgemäße System mit einem zentralen System und beispielhaft einem Fahrzeug bzw. einer Fahrzeugeinrichtung, wobei dem zentralen System in der Regel eine Mehrzahl derartiger Fahrzeugeinrichtungen zugeordnet ist;
Fig. 2 eine bevorzugte Ausführungsform einer Fahrzeugeinrichtung in der Art eines Blockschaltbildes;
Fig. 3 ein Fahrzeuggerät als Teil dieser Fahrzeugeinrichtung in Form eines Blockschaltbildes;
Fig. 4 eine Ausführungsform einer Sonderausrüstung der Fahrzeugeinrichtung gemäß Fig. 2 in Form eines Blockschaltbildes;
Fig. 5 einen beispielhaften Aufbau einer Sensoreinheit einer solchen Fahrzeugeinrichtung gemäß Fig. 2;
Fig. 6 inieinem Schema einen beispielhaften Aufbau eines zentralen Systems;
Fig. 7 zwei Hauptprozessketten des zentralen Systems in Verbindung mit einer Fahrzeugeinrichtung in einem Blockschema;
Fig. 8 ein Diagramm zur Veranschaulichung von Zentrifugalkraft und Zentripetalkraft;
Fig. 9 in einem Diagramm mit drei Teildiagrammen Verläufe von Messwerten der Zentrifugalkraft (Absolutbetrag), der Gierrate und der Geschwindigkeit eines Fahrzeugs;
Fig. 10 ein entsprechendes Diagramm mit drei Teildiagrammen zu Zentrifugalkraft, Gierrate und Geschwindigkeit, wobei nunmehr jedoch Unterbrechungen in der Gleichförmigkeit der Kreisbewegung gegeben sind; und
Fig. 11 in einem Schema das Datenmanagement einer Fahrzeugeinrichtung.

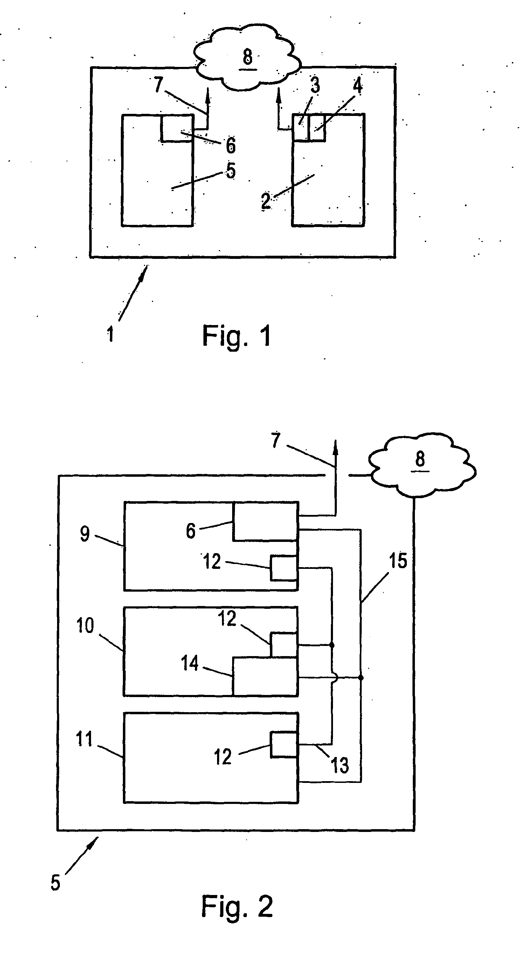

Fig. 1 zeigt eine Prinzipskizze des vorliegenden Remote Motion Recording und Analysis Systems 1, mit einem zentralen System 2, das als hier im Detail gezeigte Komponenten eine Kommunikationseinrichtung 3 und eine Authentifizierungseinheit 4 aufweist, sowie mit einer Fahrzeugeinrichtung 5 mit einem Kommunikations-Modem 6 und dessen Funkantenne 7. Verbunden sind die beiden Subsysteme 2 und 5 über ein heterogenes, IP-basiertes Kommunikationsnetzwerk 8, wobei nur die Fahrzeugeinrichtung 5 zwangsweise drahtlos angebunden ist. Das Kommunikationsnetzwerk 8 schließt alle heute üblicherweise verwendeten Übertragungs- und Verbindungsmedien ein.

In Fig. 2 ist eine Ausführungsform der Fahrzeugeinrichtung 5 mehr im Detail gezeigt, wobei sie mit drei Subkomponenten veranschaulicht ist: einem Fahrzeuggerät 9, das ein z.B. digitaler Fahrtenschreiber sein kann, einer Sonderausrüstung 10 und einer Sensoreinheit 11. Dem Fahrzeuggerät 9 ist dieser beispielhaften Anordnung das Modem 6 mit seiner Antenne 7 zugeordnet, was aber nicht zwangsweise so sein muss. Alle drei Subkomponenten 6, 10 und 11 verfügen über ein Kommunikationsinterface 12, das zu einem CAN-Bus System 13 gehören kann, über das sie miteinander verbunden sind. Darüber hinaus verfügt eines der Subsysteme, in diesem Beispiel die Sonderausrüstung 10, über einen Notfall-Energiespeicher 14, der alle drei Subkomponenten 9, 10 und 11 über eine separate Netzzuleitung 15 im Falle des Ausfalls des Bordnetzes kurzzeitig mit Energie versorgen kann. Diese Notstrom-Einrichtung soll sicherstellen, dass auch bei extremen Schockeinwirkungen noch ein Notsignal mit aussagekräftigen Informationen abgesetzt werden kann.

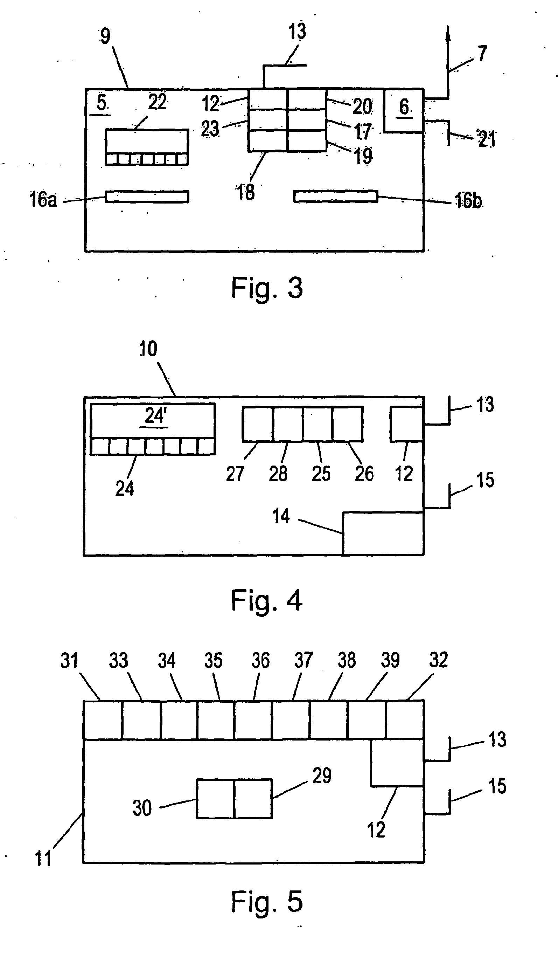

Fig. 3 zeigt mehr im Detail ein Fahrzeuggerät 9, das z.B. ein Fahrtenschreiber nach ISO16844 mit u.a. den Komponenten Kartenleser 16a und 16b, dem Modem 6 mit der Antenne 7 und einem Sicherheitsmodul 17 zur Einrichtung sicherer und authentischer Kommunikationsverbindungen, sowie zur gesicherten und signierten Ablage von Daten einem Speicher 18, der der CPU 19 des Fahrzeuggerätes 9 zugeordnet ist. über das Kommunikationsinterface 12 ist das Fahrzeuggerät 9 via CAN-Bus System 13 mit den anderen Subsystemen 10 und 11 (s. Fig. 2) verbunden. Ein Service-Interface 20 dient der Inbetriebnahme und Wartung des Fahrzeuggerätes 9, über das es mit Mess- oder Parametriergeräten verbunden werden kann. Das Modem 6 des Fahrzeuggerätes 9 ist außerdem über eine separate Zuleitung 21 mit einer unabhängigen Stromversorgung verbunden. Darüber hinaus, aber zur Normausstattung gemäß ISO16844 gehörend, weist das gezeigte Fahrzeuggerät 9 ein Bediener-Interface 22 auf. Das Fahrzeuggerät 9 verfügt bevorzugt über eine EAL4+ Sicherheitszulassung nach ISO/IEC 15408.

Als weitere Option ist im Fahrzeuggerät 9 noch die Unterbringung einer kleinen Sensorbox 23 vorgesehen, die im Falle einer Minimalausstattung die separate Sensoreinheit 11 (s. Fig. 2) ersetzen kann.

In Fig. 4 ist beispielhaft eine Ausführung der Sonderausrüstung 10 veranschaulicht, die insbesondere zur Ausstattung von z.B. Gefahrguttransportern gedacht ist, auf alle Fälle aber eine Option darstellt. Sie soll dem zentralen System 2 die Möglichkeit einer jederzeitigen, direkten Verbindungsaufnahme mit dem Fahrzeug und seinem Kraftfahrer ermöglichen. Dazu verfügt sie über eine Bedienereinheit 24, einem Mikrofon 25 und einen Lautsprecher 26. Darüber hinaus enthält sie einen Speicher 27, der der CPU 28 zugeordnet ist. Über das Kommunikationsinterface 12 ist die Sonderausrüstung 10 via CAN-Bus System 13 erfindungsgemäß mit den anderen Subsystemen 9 und 11 verbunden. Der Notfall-Energiespeicher 14 soll im Falle des Totalausfalls der Bordspannung zumindest das Absetzen eines Notrufes über das Modem 6 gewährleisten, sinnvollerweise aber auch noch die Übertragung weiterer Informationen zum zentralen System 2 und Instruktionen vom zentralen System 2 ermöglichen. Der Notfall-Energiespeicher 14 versorgt über die separate Zuleitung 15 neben dem Modem 6 auch die Sensoreinheit 11, um auch nach einem schweren Unfall alle dort erfassten und ggfs. bereits vorbewerteten und komprimierten Daten an das zentrale System 2 übertragen zu können.

Fig. 5 zeigt beispielhaft einen Aufbau der Sensoreinheit 11, die neben dem Sammeln und Weiterleiten von Daten auch eine Bewertung bzw. Vorauswertung und Datenkompression vornimmt. Dazu verfügt sie über eine leistungsstarke CPU 29 und zugeordneten Speicher 30. Durch das Kommunikationsinterface 12 ist sie über das Bussystem 13, das ein CAN-Bus sein kann, mit den anderen Subkomponenten 9 und 10 verbunden. Das Notspeisesystem, über das sie mit der Zuleitung 15 verbunden ist, versetzt sie auch bei Ausfall der Bordspannung in die Lage, temporär weiterzuarbeiten.

Über ein weiteres Interface 31, das ebenfalls ein CAN-Bus, aber auch ein optisches System oder MOST sein kann, ist sie, wenn verfügbar, mit dem Fahrzeug-Bus verbunden. Über dieses Interface 31 kann die Sensoreinheit 11 Informationen über Geschwindigkeit, Drehzahl, Einsatz der Bremsanlage, Ansprechen von ABS und/oder ESP etc. bekommen kann. Eine Geschwindigkeits- und Drehzahlinformation bekommt die Sensoreinheit 11 auch über das Kommunikationsinterface 12 vom Fahrzeuggerät 9. Ein Bremssignal erhält die Sensoreinheit 11 außerdem über einen dafür vorgesehenen Bremssignaleingang 32. Ein weiteres Interface 33, das analoge und digitale Signaleingänge besitzt, bietet der Sensoreinheit 11 die Möglichkeit, weitere, externe Sensoren anzuschließen, beispielsweise einen Drucksensor aus der:Luftfederung zur ungefähren Bestimmung der Gesamtmasse, oder Sensoren zur Überwachung der Ladung.

Zur Grundausstattung der Sensoreinheit 11 zählen jedoch bevorzugt ein GPS-Modul 34, eine Einheit 35 zur exakten Zeitmessung, ein 3D-Gyro 36, ein 3D-Beschleunigungsmesssystem 37 und ein Messmikrofon 38 zur Messung von Umgebungs- und Fahrgeräuschen. Darüber hinaus kann die Sensoreinheit 11 noch mit einem Sensorset 39, bestehend aus Infrarot-, Rauchgas- und Temperatursensor, ausgerüstet werden.

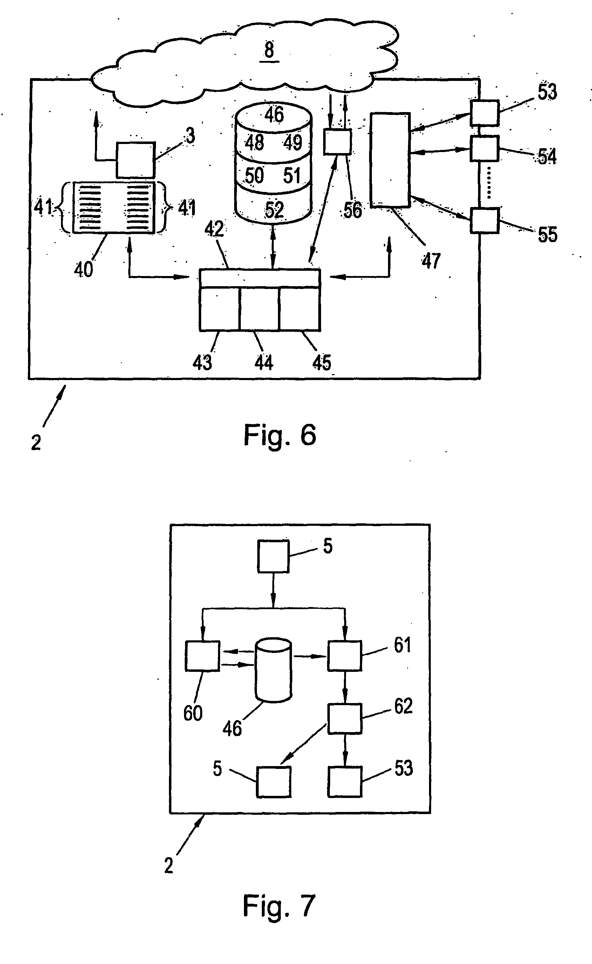

Fig. 6 zeigt das zentrale System 2 mit dem Kommunikationsmodul 3, mit einer Unternehmenskartenverwaltung und Authentifizierungseinheit 40 zur Aufnahme diverser Chipkarten 41, und mit einer Datenverarbeitungseinheit 42 (einer Analyse- und Bewertungseinheit) mit einer CPU 43, einem zugeordneten Speicher 44 sowie diverser Peripherie 45 zum Anschluss der zum zentralen System 2 zugehörigen Komponenten. Darüber hinaus gehören eine zentrale Datenbank 46, sowie ein Provider-Interface 47 zum zentralen System 2. Die zentrale Datenbank 46 enthält digitales Kartenmaterial 48, alle unbehandelten Rohdaten 49, Entscheidungsdaten 50, Daten 51 für Fahrzeug-, Fahrer- und Streckenprofile, sowie Kunden- und sonstige Daten 52.

Das Provider-Interface 47 verfügt über eine Reihe von Schnittstellen 55 und Zugänge 53, 54, 55, über die Kunden, wie z.B. Flottenbetreiber 53, Dienstleister als Unterauftragnehmer, z.B. Lieferanten für Verkehrsinformationen 54, oder aber Behörden und Organisationen mit Sonderfunktionen 55, wie z.B. Polizei, Feuerwehr, Katastrophenschutz, Technisches Hilfswerk, etc., mit dem zentralen System 2 verbunden sind.

Darüber hinaus verfügt das zentrale System 2 noch über einen Notfall-Router 56, über den in Notfällen Notrufe direkt der Datenverarbeitungseinheit 42 zugeleitet werden, die selbsttätig und unmittelbar nach vorbereiteten Mustern alle notwendigen Behörden und Organisationen mit Sonderfunktionen (Schnittstelle 55) alarmiert und mit ersten Informationen versorgt. Auch werden über den Notfall-Router 56 die Direktverbindungen zur Sonderausstattung 10 der Fahrzeugeinrichtung 5 geschaltet und unterhalten. Der Notfall-Router 56 ist als separate Einheit ausgeführt, um für Notfälle immer exklusive Verbindungs- und Kommunikationsressourcen zur Verfügung zu haben. Ggfs. ist der Notfall-Router 56 auch direkt mit dem BOS-Net verbunden.

In Fig. 7 sind schematisch die beiden Hauptprozessketten des zentralen Systems 2 veranschaulicht. Dabei liefert die Fahrzeugeinrichtung 5 der Gesamtheit aller am System angeschlossenen Fahrzeuge einen permanenten Datenstrom. Die erste Hauptprozesskette wird durch ein Modul 60 dargestellt. Darin laufen die Systemaufgaben Analyse und Lernen. Dieses Modul 60 erhält dazu grundsätzlich alle im System verfügbaren Daten, kann aber nach einer initialen Lernphase den Datenstrom selbst begrenzen bzw. Daten nach Notwendigkeiten und Erfahrungsstand selektieren. Alle hier verarbeiteten Daten werden anonymisiert verwendet, losgelöst von Kundendaten und Fahrerdaten. Diese Prozesskette dient dazu, Kriterien für Analyse und Bewertung der personalisierten Daten in der zweiten Hauptprozesskette (s. Modul 61) zu schaffen.

In diesem ersten Modul 60 werden z.B. Statistiken generiert zu
a) anonymisierten Fahrern, bezogen auf das Fahrverhalten jeweils abhängig von Fahrzeugtypen, Verkehrssituation, geografischer Position, Tageszeit, Arbeitszeit, Ladungszustand, Branchen, Gefahrenpotentialen etc.;
b) Fahrzeugen, bezogen auf Drehzahlprofile, Geschwindigkeitsprofile, Schaltverhalten, Kurvengeschwindigkeit, Bremsverhalten, Beschleunigungsverläufe usw. jeweils abhängig von der Verkehrssituation, geografischer Position, Topographie und Tageszeit;
c) geografischen Positionen bzw. konkreten Straßenabschnitten bezogen auf Geschwindigkeitsprofile, Bremsprofile, Kurvengeschwindigkeiten, Gefahrenpotential, Gefahrensituationen, Drehzahlprofile, Schaltverhalten etc.;
d) Gefahrensituationen bezogen auf Vorgeschichte, Verläufe, Zwangsabläufe, Ähnlichkeiten, Eingriffswirkung bei Eingriffen des zentralen Systems 2 usw.;
e) Ereignissen, denen typische Sensormuster zugeordnet werden, beispielsweise die Zuordnung von Geräuschen zu bestimmten Fahrsituationen;
f) Zwangsläufigkeiten von Ereignisketten;

Die Ergebnisse der statistischen Auswertung werden ihrerseits bewertet, gewichtet und in der Entscheidungsdatenbank abgelegt.

Alle die für diese Auswertungen und Analysen im Modul 60 herangezogenen Daten werden in einer Rohdatenbank (s. 46 in Fig. 6) abgelegt, in der mit speziell für diesen Zweck entwickelten Technologie des Data-Mining nach weiteren, bisher unbekannten oder unbeachteten Abhängigkeiten gesucht wird.

In der zweiten Hauptprozesskette, im Modul 61, werden speziell selektierte und personalisierte Daten verarbeitet, um Profile erstellen zu können, die direkt Fahrern, Fahrzeugen oder Orten zugeordnet sind. Anhand der Daten in der Entscheidungsdatenbank lassen sich so auch Ratings für diese Profile erstellen, die eine Qualitätsbewertung und -überwachung ermöglichen.

Fahrern beispielsweise lassen sich damit deutlich Risiko- oder Verschleißpotentiale zuordnen. Auch für Fahrzeuge lassen sich so Aussagen über die Eignung für bestimmte Aufgaben machen, die z.B. Rückschlüsse auf die Eignung von Getriebeabstufungen und Motorleistung zulassen, oder dass bestimmte Fahrer für bestimmte Fahrzeuge oder Routen besonders geeignet sind.

Eine weitere wesentliche Aufgabe aber ist das Erstellen von Ereigniskarten, Gefahrenkarten und Verlaufskarten.

Eine Ereigniskarte ist hierbei die Gesamtheit aller verwalteten, digitalen geographischen Referenzen, wobei jede einzelne Referenz für sich auch ganze Straßenabschnitte darstellen kann, denen jeweils für jede Ereignisgruppe eine Wahrscheinlichkeit des Eintritts zugeordnet ist.

Eine Gefahrenkarte ist hierbei die Gesamtheit aller verwalteten, digitalen geographischen Referenzen, wobei jede einzelne Referenz für sich auch ganze Straßenabschnitte darstellen kann, denen jeweils für jede Gefahrengruppe eine Wahrscheinlichkeit des Auftretens zugeordnet ist.

Eine Verlaufskarte widerspiegelt für die bereits benannten geografischen Referenzen die typischen Verlaufskurven für alle anderen erfassten und bewerteten Abläufe.

Diese Karten, ebenfalls in der Datenbank 46 abgelegt, dienen im nächsten Schritt der Entscheidungsfindung für mögliche Reaktionen. Auch fließen sie in die Profile für Fahrzeuge und Fahrer ein, überall da, wo diese direkten Bezüge zu geografischen Referenzen aufweisen.

In einem Modul 62 werden die Entscheidungen für Aktionen bzw. Reaktionen des Systems getroffen.

Aktionen z.B. sind Bereitstellungen der Daten betreffend Fahrerund Fahrzeugprofile am Kundenzugang 53 zusammen mit beispielsweise Empfehlungen zu bestimmten Optimierungen, Schulungen etc.

Abgestufte und angemessene Reaktionen hingegen werden ausgelöst, wenn bestimmte Potentiale aufeinander treffen; beispielsweise kann, wenn ein Fahrer mit einer aus seinem Profil entnehmbaren, bestimmten Risikobereitschaft eine Route mit einem bestimmten Gefahrenpotential befährt, das System 2 zwischen folgenden Reaktionsmöglichkeiten bzw. Eskalationsstufen entscheiden:
a) permanentes, simultanes Aufzeichnen aller verfügbarer Daten aus dem Fahrzeug;
b) Anzeige von Gefahrenstellen unmittelbar vor der Passage auf der Anzeige 24' der Bedienereinheit 24 der Sonderausstattung 10 (s. Fig. 4);
c) bei Feststellen bestimmter Ereignisfolgen, resultierend aus den aufgezeichneten Sensordaten, die eine bestimmte Wahrscheinlichkeit des Eintritts von Gefahren ergeben, erfolgt eine direkte akustische Ansprache über den Lautsprecher 26 der Sonderausstattung 10, mit der Aufforderung zum der Situation entsprechend angemessenen Handeln;
d) bei Feststellen bestimmter Eintrittswahrscheinlichkeiten von Ereignisketten mit Zwangsläufigkeiten, resultierend aus den aufgezeichneten Sensordaten, wird das betreffende Fahrzeug zwangsabgebremst. Dazu wird ein autorisierter Zugang über:den Notfall-Router 56 zur Fahrzeugeinrichtung 5 geschaltet.

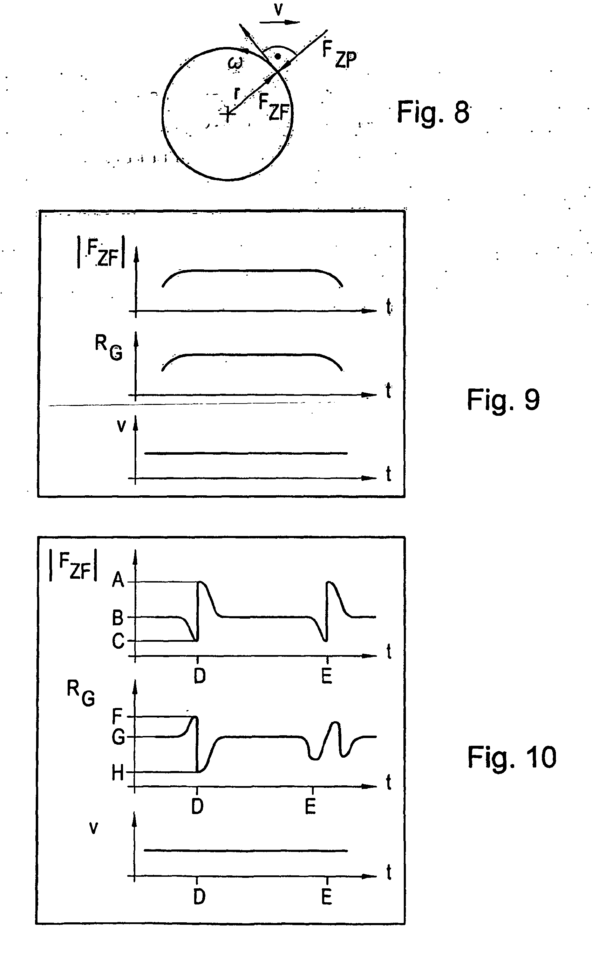

Fig. 8 ist für das Verständnis der späteren Ausführungen wichtig und zeigt schematisch die Wechselwirkung von Zentripetalkraft F_{ZP} und Zentrifugalkraft F_{ZF}. Beide Kräfte sind vom Betrag immer exakt gleich groß und immer exakt entgegengesetzt gerichtet. Sie entstehen, wenn sich ein Gegenstand in einer kreisförmigen Bewegung befindet: Der Betrag der entstehenden Zentrifugalkraft F_{ZF} ist dabei abhängig von der Masse m des Gegenstandes, vom Radius r der Kreisbewegung und von der Geschwindigkeit v, mit der sich der Gegenstand bewegt, wobei die Geschwindigkeit v als gerichtete Größe im rechten Winkel zur Zentripetalkraft F_{ZP} und Zentrifugalkraft F_{ZF} genau an dem Punkt wirkt, wo sie als Tangente den Radius r der Kreisbewegung des Gegenstandes berührt. Geschwindigkeit v und Radius r können auch als Winkelgeschwindigkeit ω mit dem Verhältnis von ω = v/ r beschrieben werden. Dabei gilt F_{ZF} = mv²/r oder F_{ZF} = mω²r. Die Zentripetalkraft F_{ZP} ist die Kraft, die den Gegenstand in die Kreisbewegung zwingt. Sie errechnet sich aus der Masse m des Gegenstandes und der aufzubringenden, gerichteten Beschleunigung a, die an jedem Punkt der Kreisbahn einwirken muss, um den Gegenstand darin zu halten. Für sie gilt die Beziehung F_{ZP} = m.a. Diese Beschleunigung a lässt sich mit einem Beschleunigungssensor exakt messen, der am in der Kreisbahn befindlichen Gegenstand angebracht und exakt in Richtung der wirkenden Zentripetalkraft F_{ZP} ausgerichtet ist.

In Fig. 9 ist ein Diagramm einer zumindest in einem Ausschnitt gleichförmigen Kreisbewegung eines Körpers in der x-y Ebene eines angenommenen 3D-Raumes veranschaulicht. Dabei sind beispielhaft Messwerte der Zentrifugalkraft F_{ZF}, der Gierrate R_{G} und der Geschwindigkeit v im Zeitverlauf t gezeigt. Die Gierrate R_{G} wird mit einem Gyro gemessen, der die Drehbewegung des Gegenstandes in der x-y Ebene, d.h. um die z-Achse, misst. Für die Zentrifugalkraft F_{ZF} und die Gierrate R_{G} werden im gezeigten Diagramm die Werte zwischen den Zuständen stetig steigend und stetig fallend als konstant angenommen. Die Geschwindigkeit v ist über den gesamten Bereich hin konstant. Damit ist für die gezeigte Bewegung des Körpers ein Einschwenken in eine Kreisbahn, ein gleichförmiges Verharren bei konstanter Geschwindigkeit in dieser Kreisbahn und ein Verlassen der Kreisbahn eindeutig gekennzeichnet.

Fig. 10 zeigt ein Diagramm für ein Fahrzeug bei einer Kreisbewegung in der x-y Ebene eines angenommenen 3D-Raumes. Das Diagramm soll ein zweiachsiges Fahrzeug darstellen, das mit einem Gyro in x-y Ausrichtung und einem Beschleunigungssensor in der Ausrichtung der Zentrifugalkraft F_{ZF} ausgestattet ist. Es sind erneut Messwerte der Zentrifugalkraft F_{ZF}, der Gierrate R_{G} und der Geschwindigkeit v über der Zeit t gezeigt. Im Gegensatz zu Fig. 9 weisen die Messungen hier zwei Unterbrechungen in der Gleichförmigkeit der Kreisbewegung auf, die auf der Zeitachse t als Ereignisse D und E gekennzeichnet sind.

Ereignis D beginnt mit einer deutlichen Verringerung der Zentrifugalkraft F_{ZF} auf einen Wert C, gefolgt von einem sprunghaften Anstieg auf den Wert A und einem Einschwingen auf den ursprünglichen Wert B. Da die Geschwindigkeit v annähernd konstant bleibt, muss der Radius r der Kreisbahn eine Veränderung aufweisen. Parallel zum Abfall der Zentrifugalkraft F_{ZF} weist die Gierrate R_{G} einen deutlichen Anstieg auf den Wert F aus, gefolgt von einem sprunghaften Abfall auf den Wert H und einem Einschwingen auf den ursprünglichen Wert G. Dieses Bild bezogen auf das zweiachsige Fahrzeug lässt nur eine Interpretation zu: Die das Fahrzeug in die Kurve zwingende Zentripetalkraft F_{ZP} fällt plötzlich aus, das Fahrzeug verlässt die Kreisbahn, unmittelbar danach setzt diese wieder ein, fängt das Fahrzeug ab und zwingt es erneut in die ursprüngliche Kreisbahn zurück. Die Informationen aus den Werten der Gierrate R_{G} verraten noch Weiteres: das Fahrzeug bricht mit der zweiten Achse aus, es übersteuert, was zu der verstärkten Drehung der z-Achse führt. Durch das Abfangen und das erneute Einschwenken auf die ursprüngliche Kreisbahn wird die Drehbewegung um die z-Achse solange reduziert, bis sich das Fahrzeug auf der Kreisbahn wieder korrekt ausgerichtet hat. Interessant für die Analyse ist an dieser Stelle der Umstand, dass bei einem "kurventreuen" Fahren, d.h. wenn das Fahrzeug allen Lenkbewegungen neutral folgt, die Messwerte von Gyro und Zentrifugalkraft F_{ZF} einen synchronen Verlauf aufweisen. Verliert ein Fahrzeug auf die vorstehend beschriebene Weise die Bodenhaftung, kommt zur (ggfs. reduzierten) Kreisbewegung um den Kurvenmittelpunkt ein Drehimpuls um die z-Achse des Fahrzeugs hinzu, der vom Gyro ebenfalls aufgezeichnet wird, der aber nicht dem System Fahrzeug - Kurvenmittelpunkt zugeordnet werden darf, sondern zum rotierenden System Fahrzeug gehört. Diese Messwerte sind nur durch die Eigendrehung des Fahrzeugs um seinen Schwerpunkt zu erklären.

Das Ereignis E weist für die Zentrifugalkraft F_{ZF} einen sehr ähnlichen Verlauf wie das Ereignis D aus, jedoch gibt es bei der Gierrate R_{G} ein deutlich anderes Bild: Der Abfall der Zentrifugalkraft F_{ZF} geht synchron zum Abfall der Gierrate R_{G} einher, genauso wie der nachfolgende plötzliche Anstieg und nahezu das schlussendliche Einschwingen. In diesem Verlauf bricht die Vorderachse des Fahrzeugs aus. Der Fahrzeugschwerpunkt verlässt den Radius der Kreisbahn, durch eine nahezu Geradeausfahrt verringert sich die Gierrate R_{G}, und die Zentrifugalkraft F_{ZF} verringert sich entsprechend dem dadurch vergrößerten Kurvenradius. Anschließend greifen die Räder wieder und das Fahrzeug wird zur Korrektur des (Untersteuern genannten) Effektes stärker in die Kurve gezwungen. Der starke Anstieg der Zentrifugalkraft F_{ZF} rührt aus der plötzlichen, neuen Haftung der Räder her, das Einschwingen aus der Korrektur zum Einschwenken auf die ursprüngliche Kreisbahn. Die Asynchronität zwischen Gierrate R_{G} und Zentrifugalkraft F_{ZF} ist auch hier Indiz für den Eigendrehimpuls des Fahrzeugs und das Entgegenwirken und kann auch für diesen Fall als Kriterium für die Analyse verwandt werden.

Solche Ereignisse treten im täglichen Verkehrsgeschehen viel häufiger auf, als allgemeinhin angenommen wird. Verunreinigungen der Fahrbahn, herbstliches Laub nach kurzen Regenschauern etc. können Ursachen dafür sein. Nur ein Bruchteil dieser Ereignisse wird von den Insassen registriert und es sind auch nicht alle für eine Erfassung interessant. Um hier durch eine sinnvolle Vorselektion zu statistisch verwertbaren Ereignissen zu kommen, wird bereits in der Sensoreinheit 11 eine qualitative Vorbewertung vorgenommen. Dazu sucht die Sensoreinheit 11 in den aufgezeichneten Daten von Gyro 36 und Beschleunigungssensoren 37 nach entsprechenden Mustern und vergleicht deren Beträge an den erkannten Unstetigkeitsstellen mit den vom System für eine Vorselektion ausgegebenen Grenzwerten A, C, F und H. Werden diese Grenzwerte erreicht oder überschritten, erfolgt eine Übertragung der aufgezeichneten Daten an das zentrale System 2.

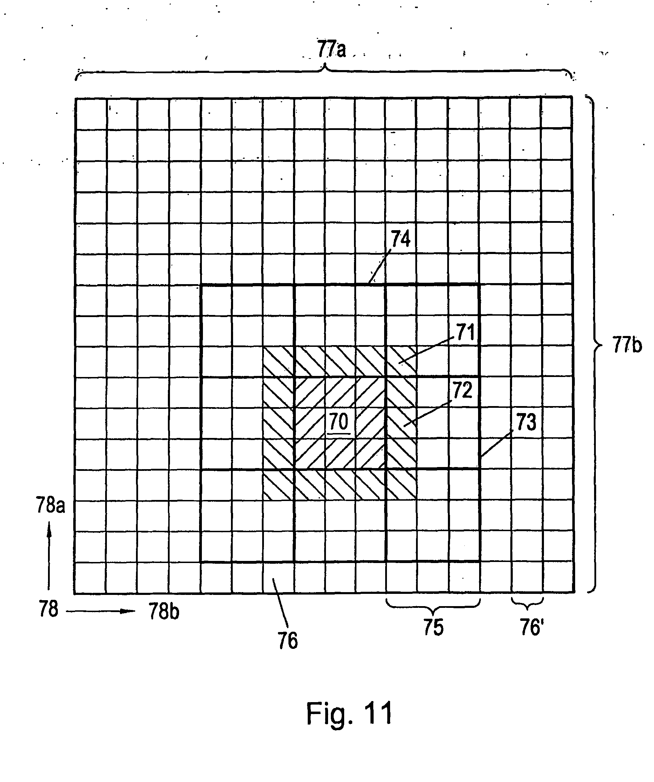

Fig. 11 zeigt schematisch das Datenmanagement für die Fahrzeugeinrichtung 5. Davon ausgehend, dass ein RMR-System auf einer geographischen Fläche 78 mit der X-Y-Ausdehnung 78a, 78b eingerichtet und mit Kartenmaterial unterlegt wurde, wird diese geographische Fläche 78 in eine Anzahl 77a x 77b von Planquadraten 76 unterteilt. Als in Planquadrat 70 liegend wird die aktuelle Position eines Fahrzeugs angenommen. Die Fahrzeugeinrichtung 5. hält die Daten der sie direkt umgebenden Planquadrate, z.B. bis zu dem (quadratisch gezeichneten) "Ring", der durch die Planquadrate 71 und 72 repräsentiert wird. Enthalten diese geladenen Planquadrate z.B. sehr große Datenmengen, beispielsweise wegen einer sehr hohen Anzahl von potentiellen Gefahrenzonen, werden die von der Fahrzeugeinrichtung 5 zu ladenden Planquadrate 76 mit einer Kantenlänge 76' festgelegt. Sind in den die aktuelle Fahrzeugposition 70 umgebenden Planquadraten, z.B. 71, 72 nur geringe Datenmengen enthalten, werden die von der Fahrzeugeinrichtung 5 zu ladenden Planquadrate z.B. mit einer Kantenlänge 75 festgelegt. Daraus ergeben sich sich zu ladende Planquadrate, die durch den Ring der Planquadrate 73 und 74 repräsentiert werden.

Nachfolgend soll die Erfindung noch anhand konkreter Beispiele bezüglich der Bewertung von Fahrsituationen weiter erläutert werden:

### 1. Kurvenfahrten

Kurvenfahrten werden durch zwei Größen relevant charakterisiert: durch den Kurvenradius r und durch die Geschwindigkeit v, wobei hier der rechtwinkelig zur wirkenden Zentrifugalkraft F_{ZF} gerichtete Geschwindigkeitsvektor betrachtet werden soll, da alle drei ggfs. im Fahrzeug verfügbaren Geschwindigkeitsmessverfahren v ausgeben.

Entscheidend für den Betrag der Zentrifugalkraft F_{ZF} ist die anliegende Winkelgeschwindigkeit ω mit v = ωr, für die das Verhältnis F_{ZF} = mω²r gilt. In Richtung und Betrag exakt entgegenwirkend zwingt die Zentripetalkraft F_{ZP} das Fahrzeug in die Kurve. Sie wird im System Fahrzeug-Straße repräsentiert durch die Reibungskraft F_{R}, die von den Reifen auf der Straße rollend aufgenommen werden kann. Die (maximale) Reibungskraft F_{R} errechnet sich aus dem Reibungskoeffizienten µ_{R} und der Normalkraft F_{N} = mg (Fahrzeugmasse x Erdbeschleunigung) zu F_{R} = µ_{R} F_{N}. Solange nun die maximal mögliche Reibungskraft F_{R} größer als die durch die Winkelgeschwindigkeit bedingte Zentripetalkraft F_{ZP} ist, liegt das Fahrzeug sicher auf der Straße. Da Fahrzeugmasse und Erdbeschleunigung konstant sind, hängt der Betrag der Reibungskraft F_{R} ausschließlich vom Reibungskoeffizienten µ_{R} ab.

Für den Betrag des Reibungskoeffizienten gilt allgemein: Für Haftreibung zwischen zwei Materialien ist er grundsätzlich größer als für Gleitreibung, und zwischen trockenen Oberflächen ist er ebenfalls grundsätzlich größer als zwischen befeuchteten oder geschmierten Oberflächen.

Für rollende Reifen auf Fahrwegen gilt immer der Haftreibungskoeffizient, für rutschende Reifen (wenn das Fahrzeug schleudert oder bremst) gilt der Gleitreibungskoeffizient.

Aus diesen Zusammenhängen können nun für jedes Fahrzeug die Beträge für die maximal darstellbare Zentripetalkraft F_{ZP} ermittelt werden, und für jede Geschwindigkeit v kann bei bekannter Zentripetalkraft F_{ZP} der minimale Kurvenradius r bzw. für jeden Kurvenradius r kann die maximal mögliche Geschwindigkeit v ermittelt werden. Aus demselben Reibungskraft-Wert F_{R} kann damit auch die maximal mögliche Bremsverzögerung und der dazu benötigte Bremsweg ermittelt werden. Diese gesicherten Zusammenhänge verändern sich jedoch drastisch, wenn sich Fahrbahnuntergründe oder Witterungsbedingungen ändern. Bekanntermaßen sind die Bewegungsmöglichkeiten bei Schnee und Eis am weitesten eingeschränkt. Aber auch Regen und nasses Laub oder nasse Erde auf der Fahrbahn halten genügend Überraschungen bereit. Hinzu kommt, dass sich, wenn ein Fahrzeug einmal ins Gleiten/Schleudern kommt, durch den Koeffizientenübergang von Haft- zu Gleitreibung die maximal darstellbare Reibungskraft und damit die Zentripetalkraft verringert. Als einzige dann nicht von der Fahrzeugmasse bzw. dessen Impuls abhängige Größe verändert sich der Radius r dann derart, dass das Verhältnis von Zentripetal- und Zentrifugalkraft weiter stimmt. Aber damit bricht das Fahrzeug aus und verlässt i.d.R. den Fahrweg.

Nun fährt nicht jedes Fahrzeug am Limit oder nicht jedes kurze Rutschen einer Achse führt zum sofortigen Ausbrechen eines Fahrzeugs. Vielmehr bleiben die meisten solcher Ereignisse nahezu unbemerkt oder geraten sofort wieder in Vergessenheit, können von Sensoren aber aufgezeichnet werden. Genau hier setzt das erfindungsgemäße System an. Solche Ereignisse, wie in Fig. 10 dargestellt, geben sofort Aufschluss über den Betrag der Reibungskoeffizienten zu einem bestimmten Zeitpunk an einem bestimmten Ort und zu bestimmten Witterungsbedingungen und Jahreszeiten. Diese Information werden zur weiteren Bearbeitung, Analyse, Bewertung und Speicherung in das zentrale System übertragen. Darüber hinaus gelten diese Koeffizienten natürlich auch uneingeschränkt für den nachfolgenden Verkehr.

Im zentralen System 2 werden nun zu dem betroffenen Straßenabschnitt sofort die gesetzten Limits überprüft, ggfs. neu gesetzt oder korrigiert und in die Entscheidungsdatenbank geschrieben. Es erfolgt außerdem eine Neubewertung des Gefahrenpotentials. Bei Gefahr im Verzug, z.B. bei extrem verringerter Haftreibung, wie es beispielsweise bei Glatteis der Fall wäre, ergeht an alle im betroffenen Segment erfassten Fahrzeuge (sie sind durch die Systemanbindung und das Herunterladen der entsprechenden Planquadrate als solche erkennbar), eine Korrekturnachricht mit der Kennzeichnung der neuen Gefahrenstelle.

### 2. Bremswege

Auch für die Bremswirkung ist die maximal verfügbare Reibungskraft F_{R} = µ_{R} F_{N} von entscheidender Bedeutung. Allerdings lassen sich ohne zusätzliche Informationen über deren Wirkung keine Aussagen über den Betrag der Reibungskraft F_{R} machen, da Veränderungen in der Beschleunigung a auch aus einer unterschiedlich starken Betätigung der Bremse herrühren können. Erst mit der Verfügbarkeit von Daten vom ABS- oder ESP-System lassen sich diese Aussagen generieren und lässt sich ein Reibungskoeffizient µ_{R} = a/g errechnen.

Neben der Ablage der Information in den Daten zum betroffenen Straßenabschnitt gehen diese Informationen über Bremsereignisse im Grenzbereich auch in das jeweilige Fahrzeug- und Fahrerprofil ein.

### 3. Bremsen aus hohen Geschwindigkeiten

Ebenfalls Indizien für Gefahrensituationen stellen Bremsvorgänge mit hoher Verzögerungswirkung aus hohen Geschwindigkeiten heraus dar. Das System erfasst diese. Einzelfälle lassen sich grundsätzlich nicht vermeiden, statistische Häufungen bei einzelnen Fahrern aber lassen sich als Zeichen für Risikobereitschaft oder aber als Risikopotential werten, und als solche werden sie auch in den Profilen erfasst. Parallel dazu findet eine Bewertung zu örtlichen Häufungen in Zusammenhang mit ggfs. bestimmten Umwelt- oder sonstigen Einflüssen statt.

### 4. Aquaplaning

Als Indizien für Aquaplaning wird eine spürbare Verzögerungswirkung ohne Betätigung der Bremsanlage oder ein Hochdrehen des Motors wahrgenommen, einhergehend mit dem Ansprechen des ESP und ggfs. des ABS, wenn im weiteren Verlauf zusätzlich die Bremse betätigt wird, und manchmal ein Ausbrechen aus der Spur. Werden solche Indizien erfasst, stellen sie immer ein Risikopotential dar und führen zwangsweise zu Reaktionen des Moduls 62 in der zweiten Hauptprozesskette gemäß Fig. 7.

### 5. Retarder-Nutzung

Die Nutzung des Retarders wird überwacht. Im Zusammenhang mit Motordrehzahl, Bremssignal, Beschleunigungswerten und vom Messmikrofon erfassten Geräuschmustern lässt sich die Verwendung des Retarders in einem Fahrzeug feststellen. Vor allem aus Gründen der Verschleißminimierung, aber auch zur Vermeidung von Gefahrensituationen durch Bremsversagen ist der Einsatz des Retarders empfehlenswert. Besonders in topografisch anspruchsvollen Gebieten ist dessen Nutzung angeraten. Die Verwendung wird im Fahrerprofil, die Wirkung im Fahrzeugprofil abgelegt.

### 6. Grenzdrehzahlbereiche

Der Drehzahlverlauf wird in zwei unabhängigen Systemen erfasst und bewertet. Ein System bewertet die Drehzahl im Verhältnis zu den technischen Daten des Fahrzeugs, um angemessen zu topografischen Randbedingungen ein Rating im Vergleich zum Optimum und zum verschleißarmen Fahren zu bekommen. Ein zweites System bewertet den Fahrer im Kontext von topografischen Randbedingungen, Verkehrslage und Straßenzügen. Abweichungen im Verhaltensmuster lassen im Vergleich zu ähnlichen oder identischen Bedingungen Rückschlüsse auf Stress, Risikobereitschaft oder Gefahrensituationen zu.

### 7. Datenaufnahme im Fahrzeug

### 7.1 Mikrofon

Das Mikrofon liefert alle Umgebungsgeräusche, die in der Fahrerkabine erfassbar sind. Diese Daten werden digitalisiert und an das zentrale System 2 übertragen. Dort werden sie einer FFT (Fast Fourier Transformation - schnelle Fouriertransformation) unterzogen. Das Ergebnis wird für Korrelationsanalysen verwendet, z.B. um durch Autokorrelation das Signal in sinnvolle Signalklassen zu unterteilen, indem nach statistischen Verteilungen des statistischen Abstandes der Korrelationsfaktoren aus der Autokorrelation gesucht wird. Sind solche Signalklassen gefunden (z.B. trockene Fahrbahn, Regen. Laub, Schnee, Asphalt, etc.), wird nach stochastischen Abhängigkeiten von anderen Größen gesucht.

### 7.2 IR-, Rauchgas- und Temperatursensoren

Diese Sensoren werden mit justierbaren Schwellwerten als Ereignistrigger verwendet, um hier ganz konkret Brandereignisse zu detektieren und entsprechend Systemreaktionen auszulösen. Diese Sensoren werden jedoch auch in die Erhebung statistischer Daten einbezogen.

### 7.3 Drucksensoren in der Luftfederung zur Grobbestimmung der Gesamtmasse

Wenn vorhanden, liefern diese Sensoren Daten, die mit den Daten der Beschleunigungssensoren der z-Achse und den Daten der Gyros der y-z Ebene (Seitenneigung) korreliert werden, somit qualitative Informationen über den Beladungszustand sowie Ladungsverschiebungen auf dem Fahrzeug.

### 8. Korrelationsanalysen

Ein zentraler Bestandteil des Systems 1 ist die Korrelationsanalyse als Trainingsprogramm für die erste Hauptprozesskette (Modem 60 in Fig. 7). Sie soll die abstrakte Erkennung von Zusammenhängen ermöglichen, ohne dass eine Erkennung der spezifischen Situation einhergehen muss, was erst einen voll automatischen Trainingsablauf erlaubt. Folgendes Beispiel kann zur Erläuterung gegeben werden: Zu einem bestimmten Straßenabschnitt lassen sich einem bestimmten Frequenzspektrum der Daten des Messmikrofons mit großer Häufung bestimmte maximale Reibungskoeffizienten zuordnen, UND mit einer bestimmten und immer wiederkehrenden Änderung des Spektrums geht mit ebenso großer Häufung eine Absenkung des maximalen Reibungskoeffizienten einher. Das System erkennt die Gültigkeit dieser Abhängigkeit auch für eine große Menge anderer Straßenabschnitte. Da die Messung des Frequenzspektrums viel dichtere Daten liefert als der nur in Grenzsituationen messbare maximale Reibungskoeffizient ergibt, schließt das System 1 nun jedes mal bei einer derartigen Veränderung des Frequenzspektrums auf eine Absenkung des Reibungskoeffizienten und kann in diesen Fällen wesentlich früher auf solcherart veränderte Bedingungen reagieren.

Was das System 1 nicht weiß, ist, dass das veränderte Spektrum z.B. Regen oder Schnee bedeutet.

Diese Analyse wird für alle möglichen Abhängigkeiten durchgeführt, wobei die Aufgabenstellungen neben vorprogrammierten Analysen, deren Sinnfälligkeiten offensichtlich sind, auch aus den Ergebnissen des Data Mining generiert werden. Das Data Mining soll dabei helfen, Korrelationsanalysen auch auf nicht offensichtlich im Zusammenhang stehende Kombinationen von Datengruppen auszudehnen.

Ein weiteres Beispiel soll dies aufzeigen, auch wenn dessen Sinnfälligkeit hier offensichtlich ist: Die Korrelationsanalyse von Reibungskoeffizienten und Frequenzspektren in der Veränderung von "Trocken" nach "Regen" (Signalklassen) liefert im Ergebnis eine Aussage der stochastischen Unabhängigkeit. Diese Aussage ist nach gegebenem Ermessen falsch, mathematisch aber korrekt, weil eine weitere Größe in der Betrachtung fehlt: die für die Analyse herangezogenen Daten weisen eine große Vielfalt an Fahrbahnuntergründen mit unterschiedlichsten Reibungskoeffizienten auf, deren statistische Verteilung die Unterschiede, die durch Feuchtigkeit entstehen, vollständig überblenden, wodurch ein Korrelationsfaktor nahe NULL ermittelt wird. Erst die Differenzierung von Fahrbahnuntergründen und deren Berücksichtigung in der Korrelationsanalyse führt zum richtigen Ergebnis. Das wiederum setzt voraus, dass Fahrbahnuntergründe als solche erkannt und aus den Signalmustern von Beschleunigungssensoren der z-Achse und den Mikrofonen extrahiert werden, was aber wiederum voraussetzt, dass die Zusammenhänge zwischen diesen Signalen als relevant für eine Extrahierung, Korrelation und Klassifikation erkannt werden.

## Patentansprüche

1. Verfahren zur simultanen Fahrzeug- und Fahrprofilüberwachung, wobei zwischen einem Fahrzeug und einem zentralen Rechner-System eine drahtlose Daten-Verbindung aufgebaut wird und Fahrzeug- sowie Fahr-spezifische, von Sensoren erfasste Daten, wie z.B. betreffend Fahrzeug-Geschwindigkeit, Motordrehzahl, 3D-Beschleunigung, Fahrzeugposition, Bremsen, Gesamtmasse, Temperatur, Feuchtigkeit und/oder FahrzeugPosition, vom Fahrzeug über die drahtlose Verbindung zum zentralen System übertragen werden, wo sie mit in einer Datenbank abgelegten Referenzdaten verglichen werden, und abhängig vom Auswertungsergebnis Signale vom zentralen System zum Fahrzeug über die drahtlose Verbindung zurück übertragen werden, wobei die Daten unter Ermittlung von zeitlichen Verläufen von Bewegungen, Zuständen und dgl. sowie von Grenzwerten der gemessenen und beeinflussbaren Größen ausgewertet werden, und dass die zum Fahrzeug übertragenen Signale in einer Fahrzeugeinrichtung zu direkten Steuer- bzw. Regelsignalen für Fahrzeug-Komponenten, z.B. die Bremsanlage, umgesetzt werden, **dadurch gekennzeichnet, dass** die drahtlose Daten-Verbindung eine gesicherte Verbindung ist und dass die vom Fahrzeug übertragenen Daten im zentralen System in zwei parallel verlaufenden Prozessketten verwertet werden, wobei in der einen Prozesskette die Daten im Hinblick auf ein Lernen und Trainieren des Systems, z.B. zur Ergänzung und/oder Optimierung von Grenzwert-Daten, verwertet werden, wogegen sie in der anderen Prozesskette analysiert und ausgewertet werden.

2. Verfahren nach Anspruch 1, **dadurch gekennzeichnet, dass** die Verbindung zwischen dem Fahrzeug und dem zentralen System unter Feststellung der Identität von Fahrzeug und Fahrer einerseits und des zentralen Systems andererseits authentifiziert wird.

3. Verfahren nach Anspruch 1 oder 2, **dadurch gekennzeichnet, dass** die Verbindung zwischen dem Fahrzeug und dem zentralen System kryptographisch gesichert wird.

4. Verfahren nach einem der Ansprüche 1 bis 3, **dadurch gekennzeichnet, dass** Auswertungsergebnisse mit geographischen Positionen, Straßendaten und/oder Verkehrszuständen korreliert werden.

5. Verfahren nach einem der Ansprüche 1 bis 4, **dadurch gekennzeichnet, dass** die Bewegungs- bzw. Zustandsdaten statistisch ausgewertet werden.

6. Verfahren nach einem der Ansprüche 1 bis 5, **dadurch gekennzeichnet, dass** die Bewegungs- bzw. Zustandsdaten stochastischen Vergleichen unterzogen werden.

7. Verfahren nach einem der Ansprüche 1 bis 6, **dadurch gekennzeichnet, dass** bei der Auswertung der Daten Verhaltens-Profile vom Fahrzeug und/oder Fahrer erstellt werden.

8. Verfahren nach einem der Ansprüche 1 bis 7, **dadurch gekennzeichnet, dass** bei der Auswertung der Daten Gefahrensituationen bzw. -potentiale erkannt und durch Rücksenden von Signalen über die gesicherte Verbindung im Fahrzeug angezeigt werden.

9. Verfahren nach einem der Ansprüche 1 bis 8, **dadurch gekennzeichnet, dass** bei der Auswertung eine Ereignis-, Gefahren- und/oder Verlaufskarte angelegt wird.

10. Verfahren nach einem der Ansprüche 1 bis 9, **dadurch gekennzeichnet, dass** auf Basis der Auswertung ein Fahrerprofil und bzw. oder eine Bewertung der Fahrereigenschaften ermittelt wird.

11. System (1) zur simultanen Fahrzeug- und Fahrprofilüberwachungmit einer Fahrzeugeinrichtung (5), die Sensoren (11) und eine Kommunikationseinrichtung (6) für den Aufbau einer drahtlosen Verbindung zwischen der Fahrzeugeinrichtung (5) und einem zentralen Rechner-System (2) aufweist, welches eine Datenverarbeitungs-, Analyse- und Bewertungseinheit (42), Datenbankmittel (46) sowie eine Kommunikationseinrichtung (3) für den Aufbau einer drahtlosen Verbindung aufweist, wobei die Datenverarbeitungs-, Analyse- und Bewertungseinheit (42) eingerichtet ist, die Daten unter Ermittlung von zeitlichen Verläufen von Bewegungen, Zuständen und dgl. sowie von Grenzwerten der gemessenen und beeinflussbaren Größen auszuwerten, und dass die zum Fahrzeug übertragenen Signale in einer Fahrzeugeinrichtung zu direkten Steuer- bzw. Regelsignalen für Fahrzeug-Komponenten, z.B. die Bremsanlage, umgesetzt werden, **dadurch gekennzeichnet, dass** die Kommunikationseinrichtung (3) bzw. (6) jeweils für den Aufbau einer gesicherten drahtlosen Verbindung eingerichtet ist und dass das zentrale System (2) zwei Hauptprozessketten, mit zwei Haupt-Modulen (60, 61), aufweist, wobei in der einen Prozesskette die Daten im Hinblick auf ein Lernen und Trainieren des Systems, z.B. zur Ergänzung und/oder Optimierung von Grenzwert-Daten, verwertet werden, wogegen sie in der anderen Prozesskette analysiert und ausgewertet werden.

12. System nach Anspruch 11, **dadurch gekennzeichnet, dass** das zentrale System (2) eine Einheit (40) zur Authentifizierung in Zuordnung zur Kommunikationseinrichtung (6) aufweist.

13. System nach Anspruch 11 oder 12, **dadurch gekennzeichnet, dass** das zentrale System eine Einheit (40-41) zur Verwaltung von Unternehmenskarten (41) in Zuordnung zur Kommunikationseinrichtung (3) aufweist.

14. System nach einem der Ansprüche 11 bis 13, **dadurch gekennzeichnet, dass** das zentrale System (2) eine Schnittstelle (47) und Zugänge (Portale) (53, 54, 55) zu externen Stellen, wie Kunden etc., aufweist.

15. System nach einem der Ansprüche 11 bis 14, **dadurch gekennzeichnet, dass** das zentrale System (2) einen Notfall-Router (56) aufweist, der direkt mit der Datenverarbeitungseinheit (42) verbunden ist.

16. System nach Anspruch 14 und 15, **dadurch gekennzeichnet, dass** der Notfall-Router (56) eingerichtet ist, drahtlos übertragene Notruf-Signale direkt zu empfangen.

17. System nach einem der Ansprüche 11 bis 16, **dadurch gekennzeichnet, dass** die Fahrzeugeinrichtung (5) zumindest einige Komponenten, ausgewählt aus der Gruppe, bestehend aus:
- 3D Gyro
- 3D Beschleunigungs-Sensor
- GPS, GSM Ortung
- Feuchtigkeitssensoren, ggfs. gespeist aus den Informationen eines Regensensors,
- Geschwindigkeitsmesseinheit
- Drehzahlmesser
- Messmikrofon zur Aufnahme von Umgebungsgeräuschen
- IR-, Rauchgas- und Temperatursensoren
- ggfs Drucksensoren in der Luftfederung zur ungefähren Bestimmung der Gesamtmasse
- Bremssignal, ggfs. Sensoren betreffend Ansprechen von ABS und/oder ESP
- exakte Zeitmesseinheit
- zusätzliches Interface für den Anschluss von Sensoren für spezielle Gefahrgut-Transporter
- Direktverbindung zur Kommunikationseinrichtung mit Notspeisung
- Kartenleser zur Feststellung der Fahrer-Identität aufweist.

## Claims

1. Method for simultaneous vehicle and driving profile monitoring, wherein a wireless connection is set up between a vehicle and a central computer system, and vehicle specific and driving specific data, captured by sensors, such as e.g. relating to vehicle speed, engine speed, 3D acceleration, vehicle position, braking, overall mass, temperature, moisture and/or vehicle position, are transmitted from the vehicle to the central system via the wireless connection, where they will be compared to reference data stored in a data base, and depending on the evaluation result signals are retransmitted from the central system to the vehicle via the wireless connection, wherein the data are evaluated by determining time history of movements, statuses and the like as well as of thresholds of measured and manipulable magnitudes, and the signals transmitted to the vehicle are converted into direct control signals for vehicle components, e.g. the brake system, **characterized in that** the wireless data connection is a secure connection and the data transmitted from the vehicle are in the central system utilized in two parallel process chains, wherein in the one process chain the data are utilized with regard to teaching and training of the system, e.g. for addition and/or optimization of threshold data, whereas in the other process chain they are analyzed and evaluated.

2. Method according to claim 1, **characterized in that** the connection between the vehicle and the central system is authenticated by determining identity of vehicle and driver on the one hand and the central system on the other.

3. Method according to claim 1 or 2, **characterized in that** the connection between the vehicle and the central system is secured cryptographically.

4. Method according to one of claims 1 to 3, **characterized in that** the evaluation results are correlated with geographic positions, street data and/or traffic statuses.

5. Method according to one of claims 1 to 4, **characterized in that** the movement or status information is evaluated statistically.

6. Method according to one of claims 1 to 5, **characterized in that** the movement or status information is compared stochastically.

7. Method according to one of claims 1 to 6, **characterized in that** in data evaluation behavior profiles of vehicle and/or driver are created.

8. Method according to one of claims 1 to 7, **characterized in that** in data evaluation dangerous situations or risk potentials are recognized and displayed in the vehicle by retransmitting the signals via the secured connection.

9. Method according to one of claims 1 to 8, **characterized in that** in data evaluation a map of events, dangerous situations and/or behavior is created.

10. Method according to one of claims 1 to 9, **characterized in that** based on the evaluation a driver profile and/or an evaluation of the driver's performance is determined.

11. System (1) for simultaneous vehicle and driving profile monitoring, comprising a vehicle device (5) having sensors (11) and a communication device (6) for setting up a wireless connection between the vehicle device (5) and a central computer system (2), which has a unit (42) for processing, analysis and evaluation of data, data base means (46) as well as a communication device (3) for setting up a wireless connection, wherein the unit (42) for processing, analysis and evaluation of data is arranged to evaluate the data by determining time history of movements, statuses and the like as well as thresholds of measured and manipulable magnitudes, and to convert the signals transmitted to the vehicle into direct control signals for vehicle components, e.g. the brake system, **characterized in that** the communication device (3) or (6) is each arranged for setting up a secure wireless connection, and the central system (2) has two main process chains comprising two main modules (60, 61), wherein in one process chain the data are utilized with regard to teaching and training of the system, e.g. for addition and/or optimization of threshold data, whereas in the other process chain they are analyzed and evaluated.

12. System according to claim 11, **characterized in that** the central system (2) has a unit (40) for authentication in association with the communication device (6).

13. System according to claim 11 or 12, **characterized in that** the central system has a unit (40-41) for management of company maps (41) in association with the communication device (3).

14. System according to one of claims 11 to 13, **characterized in that** the central system (2) has an interface (47) and accesses (portals) (53, 54, 55) to external locations, such as clients, etc.

15. System according to one of claims 11 to 14, **characterized in that** the central system (2) has an emergency router (56), which is directly connected to the data processing unit (42).

16. System according to claim 14 and 15, **characterized in that** the emergency router (56) is established to directly receive emergency signals transmitted wirelessly.

17. System according to one of claims 11 to 16, **characterized in that** the vehicle device (5) has at least some components selected from the group consisting of:
- 3D gyro
- 3D acceleration sensor
- GPS and GSM positioning
- moisture sensors, where applicable, fed with information of a rain sensor
- speed measuring unit
- rotational-speed sensor
- measuring microphone for recording ambient noise
- IR, flue gas and temperature sensors
- pressure sensors within air suspension for approximate determination of overall mass, where applicable
- braking signal, where applicable, sensors relating to responding of ABS and/or ESP
- accurate time measuring unit
- additional interface for the connection of sensors for special vehicles transporting dangerous goods
- direct connection to communication device including emergency supply
- card reader for determining driver identity.

## Revendications

1. Procédé de surveillance simultanée de profil de conduite et de véhicule, dans lequel une liaison de données sans fil est réalisée entre le véhicule et un système d'ordinateur central et des données spécifiques au véhicule ainsi qu'à la conduite détectées par des capteurs, comme par exemple celles concernant la vitesse du véhicule, le régime moteur, l'accélération 3D, la position du véhicule, les freins, la masse totale, la température, l'humidité et/ou la position du véhicule, sont transmises du véhicule au système central par l'intermédiaire de la liaison sans fil, où elles sont comparées à des données de référence stockées dans une banque de données, et selon le résultat de l'évaluation, des signaux sont transmis en retour du système central au véhicule par l'intermédiaire de la liaison sans fil, dans lequel les données sont évaluées lors de la détermination de variations dans le temps de mouvements, d'états, etc., ainsi que de valeurs limites des grandeurs mesurées et sur lesquelles on peut agir, et en ce que les signaux transmis au véhicule sont convertis dans un système embarqué en signaux de commande ou de réglage directs pour les composants du véhicule, par exemple le système de freinage, **caractérisé en ce que** la liaison de données sans fil est une liaison sécurisée et **en ce que** les données transmises par le véhicule sont évaluées dans le système central en deux chaînes de processus parallèles, dans lequel, dans une chaîne de processus, les données concernant un apprentissage du système, par exemple en vue d'un ajout et/ou d'une optimisation des données de valeurs limites, sont évaluées, par contre elles sont analysées et évaluées dans l'autre chaîne de processus.

2. Procédé selon la revendication 1, **caractérisé en ce que** la liaison entre le véhicule et le système central est authentifiée lors de la détermination d'une part de l'identité du véhicule et du conducteur et d'autre part du système central.

3. Procédé selon la revendication 1 ou 2, **caractérisé en ce que** la liaison entre le véhicule et le système central est sécurisée de façon cryptographique.

4. Procédé selon l'une des revendications 1 à 3, **caractérisé en ce que** les résultats d'évaluation sont corrélés à des positions géographiques, des données de rue et/ou des conditions de trafic.

5. Procédé selon l'une des revendications 1 à 4, **caractérisé en ce que** les données de mouvement ou d'état sont évaluées statistiquement.

6. Procédé selon l'une des revendications 1 à 5, **caractérisé en ce que** les données de mouvement ou d'état sont soumises à une comparaison stochastique.

7. Procédé selon l'une des revendications 1 à 6, **caractérisé en ce que**, lors de l'évaluation des données, des profils de comportement du véhicule et/ou du conducteur sont définis.

8. Procédé selon l'une des revendications 1 à 7, **caractérisé en ce que**, lors de l'évaluation des données, des potentiels ou des situations de danger sont reconnus et sont affichés dans le véhicule par l'intermédiaire de la liaison sécurisée par retour des signaux.

9. Procédé selon l'une des revendications 1 à 8, **caractérisé en ce que** lors de l'évaluation, une carte de résultat, de dangers et/ou routière est effectuée.

10. Procédé selon l'une des revendications 1 à 9, **caractérisé en ce que**, sur la base de l'évaluation, un profil de conducteur et/ou une évaluation des caractéristiques du conducteur est défini.

11. Système (1) pour la surveillance simultanée de profil de conduite et de véhicule comportant un système embarqué (5), qui présente des capteurs (11) et un dispositif de communication (6) pour l'établissement d'une liaison sans fil entre le système embarqué (5) et un système d'ordinateur central (2), ce dernier présentant une unité de traitement de données, d'analyse et d'évaluation (42), un moyen de banque de données (46) ainsi qu'un dispositif de communication (3) pour l'établissement d'une liaison sans fil, dans lequel l'unité de traitement de données, d'analyse et d'évaluation (42) est agencée, pour évaluer les données lors de la détermination de variations dans le temps de mouvements, d'états etc. ainsi que de valeurs limites des grandeurs mesurées et sur lesquelles on peut agir, et en ce que les signaux transmis au véhicule sont convertis dans un système embarqué en signaux de commande ou de réglage directs pour les composants de véhicule, par exemple le système de freinage, **caractérisé en ce que** le dispositif de communication (3) ou (6) est agencé respectivement pour l'établissement d'une liaison sans fil sécurisée et **en ce que** le système central (2) présente deux chaînes de processus principales, comportant deux modules principaux (60, 61), dans lequel, dans une chaîne de processus, les données en vue d'un apprentissage du système, par exemple en vue de l'ajout et/ou de l'optimisation de données de valeurs limites, sont évaluées, par contre elles sont analysées et évaluées dans l'autre chaîne de processus.

12. Système selon la revendication 11, **caractérisé en ce que** le système central (2) présente une unité (40) pour une authentification lors de l'affectation au dispositif de communication (6).

13. Système selon la revendication 11 ou 12, **caractérisé en ce que** le système central présente une unité (40-41) pour gérer les cartes d'entreprise (41) lors de l'affectation au dispositif de communication (3).

14. Système selon l'une des revendications 11 à 13, **caractérisé en ce que** le système central (2) présente une interface (47) et des accès (portails) (53, 54, 55) à des postes externes, comme des clients etc.

15. Système selon l'une des revendications 11 à 14, **caractérisé en ce que** le système central (2) présente un routeur d'urgence (56), qui est relié directement à l'unité de traitement de données (42).

16. Système selon les revendications 14 et 15, **caractérisé en ce que** le routeur d'urgence (56) est agencé pour recevoir directement des signaux d'urgence transmis sans fil.

17. Système selon l'une des revendications 11 à 16, **caractérisé en ce que** le système embarqué (5) présente au moins certains composants, choisis parmi le groupe constitué par :
- un gyro 3D
- un capteur d'accélération 3D
- un système de localisation GPS, GSM
- des capteurs d'humidité, le cas échéant, alimentés à partir des informations d'un capteur de pluie
- une unité de mesure de vitesse
- un compte-tours
- un microphone de mesure pour enregistrer les bruits environnants
- des capteurs IR, de gaz d'échappement et de température
- le cas échéant, des capteurs de pression dans la suspension pneumatique en vue de la détermination approximative de la masse totale
- un signal de freinage, le cas échéant, des capteurs concernant le déclenchement de l'ABS et/ou de l'ESP
- une unité de mesure de temps exact
- une interface supplémentaire pour la connexion de capteurs pour des transporteurs de produits dangereux particuliers
- une liaison directe à l'installation de communication comportant une alimentation de secours.
- un lecteur de cartes pour déterminer l'identité du conducteur.
